# EUROPÄISCHE PATENTSCHRIFT

(11) **EP 1 103 399 B1**
(45) Veröffentlichungstag und Bekanntmachung des Hinweises auf die Patenterteilung: **12.05.2004**
(21) Anmeldenummer: 00123286.7
(22) Anmeldetag: 27.10.2000
(51) Int. Cl.: B60J 1/18

(54) **Klappverdeck für Cabriolets mit einem äusseren Verdeckbezug mit integrierter Scheibe und mit einem inneren Verdeckbezug**
Folding top for a convertible with an external cover with integrated window and with an internal cover
Toit pliant pour véhicule automobile cabriolet avec une capote externe avec une fenêtre integrée et une capote interne

(30) Priorität: 25.11.1999 DE 19956801
(43) Veröffentlichungstag der Anmeldung: 30.05.2001
(73) Patentinhaber: PARAT Automotive, Schönenbach GmbH + Co. KG, 42897 Remscheid (DE)
(72) Erfinder: Blöchl, Armin, 94089 Altreichenau (DE); Kasparak, Manfred, 94089 Neureichenau (DE)
(74) Vertreter: Patentanwälte Ostriga & Sonnet

(56) Entgegenhaltungen:
- EP-A- 0 372 374
- DE-A- 19 837 411
- DE-C- 19 804 101
- DE-U- 29 605 684
- DE-U- 29 911 610

## Beschreibung

Die Erfindung betrifft ein Klappverdeck nach dem Oberbegriff des Anspruchs 1. Ein Verdeck dieser Art ist z.B. in DE 19837411 A offenbart.

Die Erfindung befasst sich mit dem Problem der Anbindung des inneren Verdeckbezugs im Bereich von im Klappverdeck angeordneten Scheiben. Darunter ist primär die Heckscheibe zu verstehen; es ist aber auch denkbar, dass bei künftigen Verdeckkonstruktionen möglicherweise auch im Dachbereich eine Scheibe angeordnet sein könnte. Jedenfalls besitzt der Himmel einen in sich geschlossen umlaufenden oder teilumlaufenden Ausschnitt im Scheibenbereich, und hier gilt es, eine technisch einfache und optisch ansprechende Lösung zu finden.

Im Stand der Technik ist es z.B. aus DE 88 08 137 U1 oder DE 29911610 U1 bekannt, den Himmel im Bereich der Heckscheibe mittels eines Reißverschlusses zu fixieren. Dieser Reißverschluß muß einerseits am Himmelausschnitt und andererseits mit dem äußeren Verdeckstoff im Scheibenrandbereich vernäht oder verklebt sein. Dies ist kostspielig und aufwendig, und auch die Optik ist nicht besonders ansprechend. Ein ganz wichtiges Kriterium in diesem Zusammenhang ist auch das Ablageverhalten des Verdecks nach dem vollständigen Öffnen. Hierbei kann ein Reißverschluß durchaus hinderlich sein.

Des weiteren ist im Stand der Technik eine Konstruktion bekannt, bei der der innere Verdeckstoff in seinem Randbereich auf ein Aluminiumprofil aufgeschweißt ist, welches mittels einer Kunststoffleiste am Scheibenrahmen angeschraubt wird. Diese Konstruktion ist umständlich und kostenintensiv und befriedigt deshalb ebenfalls nicht.

Ausgehend von diesem Stand der Technik liegt der Erfindung die Aufgabe zugrunde, ein Klappverdeck der vorausgesetzten Art zu schaffen, welches sich durch eine besonders vorteilhafte Himmelanbindung im Scheibenbereich auszeichnet.

Die Erfindung löst diese Aufgabe mit den Merkmalen des Anspruchs 1 und ist dementsprechend dadurch gekennzeichnet, dass die ersten Verbindungselemente wenigstens ein Hakenelement umfassen, in das im wesentlichen scheibenflächenparallel sowie von der Scheibe weg das wenigstens eine zweite Verbindungselement einsetzbar ist, welches eine in einem Saum des Innenbezugs eingelegte Schiene umfasst.

Die erfindungsgemäße Lösung hat den Vorteil, dass einerseits ein äußerst sauberer und ästhetisch überaus ansprechender Scheibenrand erzielt wird, und dass - die jederzeit wiederlösbare - Anbindung des Himmels selbst von ungeschulten Personen leicht vorgenommen werden kann. Es ist dabei lediglich von der Scheibe her die am Rand des Innenbezugs vorhandene Schiene in das Hakenelement einzusetzen. Die bei geschlossenem Verdeck auf den Innenbezug einwirkende Zugspannung sorgt für einen jederzeit straffen Sitz des Innenbezugs.

Da das Hakenelement im Scheibeneinfassungsbereich des Außenbezug angebracht ist, kann der scheibenseitige Rand des Innenbezugs mit dem des Außenbezugs praktisch deckungsgleich verlaufen, was das optische Erscheinungsbild der Scheibeneinfassung positiv beeinflußt. Eine einfachere Himmelanbindung, die noch dazu jederzeit wiederlösbar ist, läßt sich kaum vorstellen.

In vorteilhafter Weise ist der Saum des Innenbezugs mit wenigstens einem fensterartigen Ausschnitt zum Eingriff des wenigstens einen Hakenelements versehen, so dass das Hakenelement unmittelbar an der Schiene angreifen, den Innenbezug aber nicht beschädigen kann.

Vorzugsweise sind mehrere Hakenelemente in Abständen zumindest längs des oberen Scheibenrandes und entsprechend zugeordnete fensterartige Ausnehmungen im Saum des Innenbezugs angeordnet.

Damit auch beim Öffnen oder Ablegen des Verdecks der Himmel seine sichere Anbindung aufrecht erhält, sieht die Erfindung des weiteren vor, dass die Hakenelemente klammmerartig ausgebildet sind und wenigstens einen Federschenkel umfassen, der die Schiene kraft- bzw. klemmschlüssig hält. Auch dies ist eine überaus einfache Maßnahme und Ausgestaltung.

Die Schiene ist vorzugsweise aus einer einfachen, flachquerschnittigen, durch plastische Verformung dauerhaft an eine ggf. vorhandene Scheibenrandwölbung anpassbaren Leiste gebildet. Infolge dieses wiederum sehr einfachen Merkmals läßt sich die Schiene und damit der scheibenseitige Innenbezugabschluss (Saum) sauber und exakt dem Scheibenverlauf anpassen.

Es ist nicht erforderlich, den Innenbezug rings um den Scheibenrand mit dem Außenbezug zu verbinden. Entsprechend einem weiteren Erfindungsmerkmal genügt es, dass sich die Schiene nur entlang dem oberen Scheibenrand erstreckt und seitliche Streifen des - elastischen - Innenbezugs am Verdeckgestell abgespannt sind.

Im Sinne einer einfachen Anbringung der Hakenelemente wird vorgeschlagen, diese mit ihren jeweiligen Befestigungsschenkeln an die Randabdeckung anzukleben.

Weitere Vorteile und zweckmäßige Ausgestaltungen der Erfindung ergeben sich der nachfolgenden Beschreibung eines in den Zeichnungen dargestellten Ausführungsbeispiels. Es zeigen:
- Fig. 1: eine schematische, schaubildliche Ansicht eines Cabriolet-Verdecks,
- Fig. 2: eine Außenansicht auf den Heckscheibenbereich eines solchen Fahrzeugverdecks,
- Fig. 3: eine Ansicht auf Außenbezug und Scheibe, vom Fahrzeuginnenraum her,
- Fig. 4: eine Ansicht auf einen Randbereich des Innenbezugs mit Blickrichtung auf die dem Außenbezug zugewandten Seite,
- Fig. 5: einen vergrößert dargestellten Ausschnitt des scheibenseitigen Randbereichs des Innenbezugs,
- Fig. 6: einen Querschnitt durch den scheibenseitigen Randbereich des Innenbezugs entsprechend der Schnittlinie VI-VI in Fig. 5,
- Fig. 7: einen entsprechenden Querschnitt durch den scheibenseitigen Randbereich des Außenbezugs, und
- Fig. 8: einen Querschnitt durch das zusammengebaute Verdeck etwa entsprechend der Schnittangabe VIII-VIII der Fig. 1.

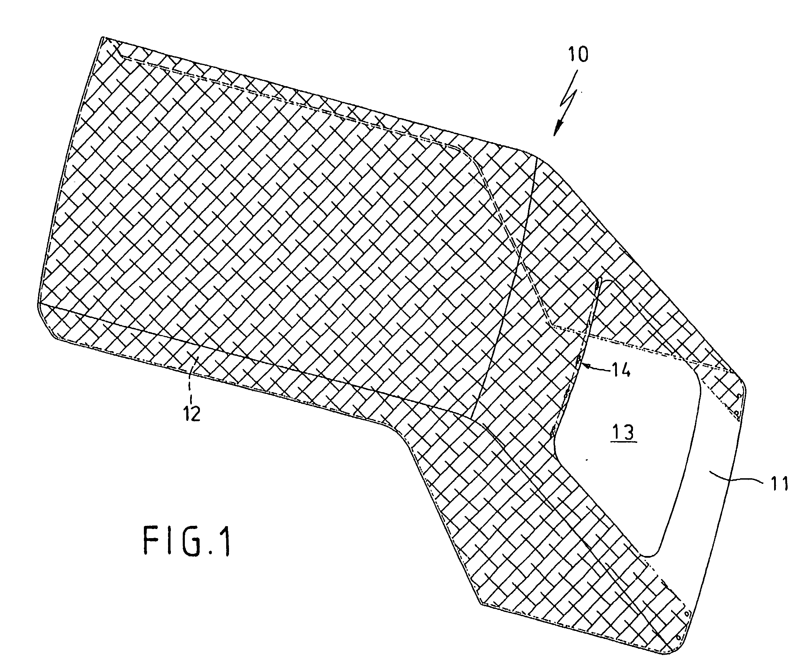

Fig. 1 zeigt in Ansicht ein Cabriolet-Verdeck 10 mit einem Außenbezug 11 und einem zur besseren Verdeutlichung schraffiert dargestellten Innenbezug 12 sowie mit einer in den Außenbezug 11 eingearbeiteten Heckscheibe 13.

Der Außenbezug 11 erstreckt sich über das gesamte Verdeck 10, der Innenbezug 12 läßt beim dargestellten Ausführungsbeispiel zumindest im Heckbereich unterhalb der Heckscheibe 13 einen Querstreifen frei. Ansonsten verläuft er im wesentlichen deckungsgleich zum Außenbezug 11.

Zwischen dem Außenbezug 11 und dem Innenbezug 12 erstreckt sich das nicht dargestellte Verdeckgestänge, welches zum Fahrgastraum hin vom Innenbezug oder dem sogenannten Himmel 12 abgedeckt wird.

Eines der wesentlichen Anliegen im Verdeckbau besteht darin, den Innenbezug 12 insbesondere im Bereich der Heckscheibe 13 sauber und in einer optisch ansprechenden Art und Weise sowie nach Möglichkeit wiederlösbar an andere Verdeckelemente, insbesondere den Außenbezug 11, anzubinden. Hierzu dient entsprechend der Erfindung eine "Klammer-Schienen-Anordnung", die in Fig. 1 lediglich schematisch gezeigt und mit 14 bezeichnet ist. Sie erstreckt sich längs des oberen Randes der Heckscheibe 13.

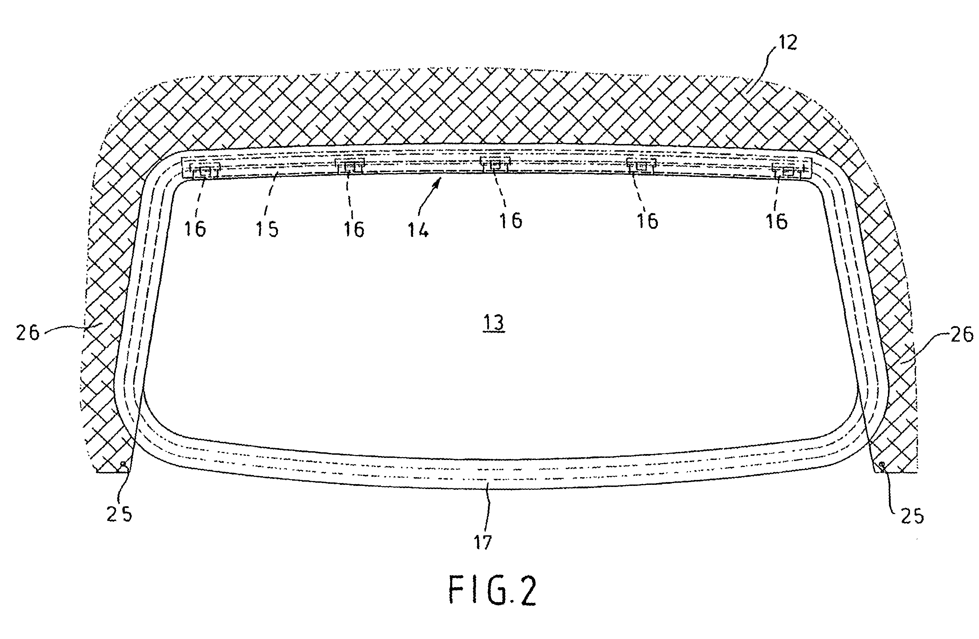

Fig. 2 zeigt mit Blickrichtung von außen auf die Scheibe 13, jedoch ohne den Außenbezug 11, einen Ausschnitt des Innenbezugs 12. Die "Klammer-Schienen-Anordnung" 14 umfasst eine dem Randbereich des Innenbezugs 12 zugeordnete Schiene 15 sowie mehrere Hakenelemente 16, die in später noch zu beschreibender Art und Weise mit dem Außenbezug 11 verbunden sind, von dem hier nur eine den Rand der Scheibe 13 rings umgebende Randabdeckung 17 dargestellt ist.

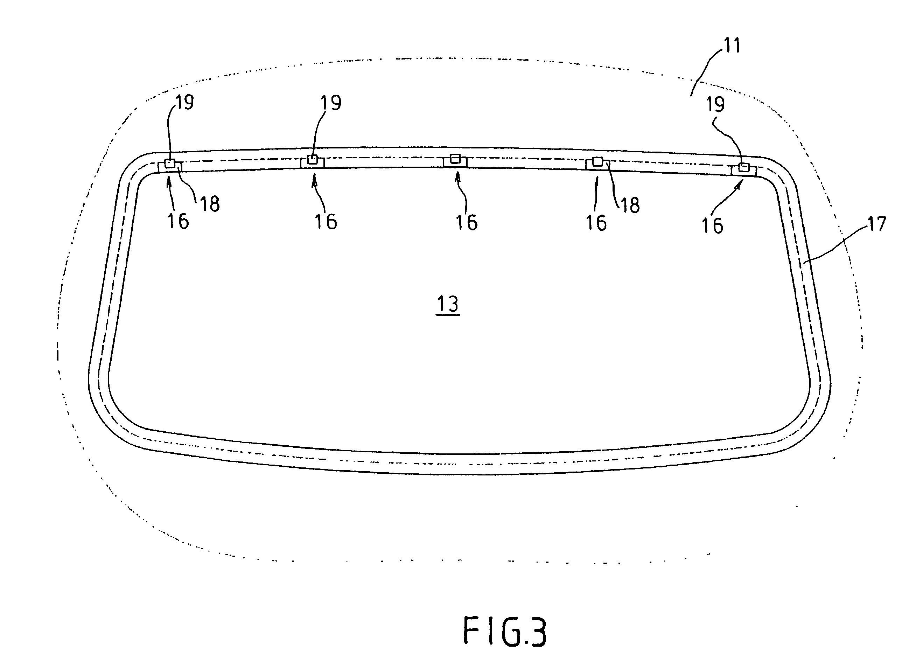

Fig. 3 ist eine entsprechende Ansicht auf die Scheibe 13 mit dem Außenbezug 11, seiner Randeinfassung 17 und den Hakenelementen 16, die zur Befestigung eine Basisplatte 18 und ansonsten einen Klammerschenkel 19 umfassen.

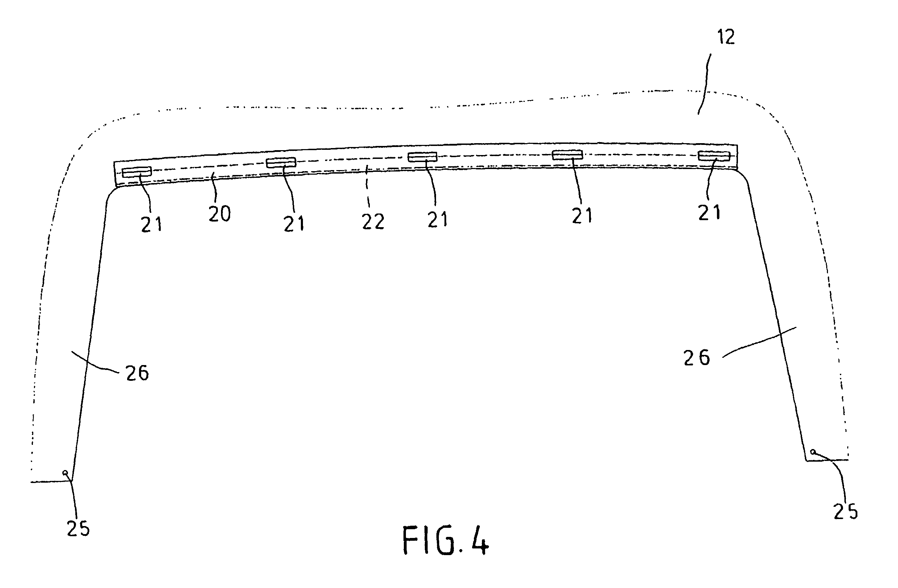

In Fig. 4 ist noch einmal der die Scheibe 13 oberseits und an den beiden Seiten umfassende Ausschnittsbereich des Innenbezugs 12 dargestellt. Entlang dem oberen Rand bereich der hier nicht gezeigten Scheibe erstreckt sich ein Hohlsaum 20 mit darin eingearbeiteten fensterartigen Öffnungen 21 entsprechend dem Anordnungsbereich der Hakenelemente 16. Ferner ist in den Hohlsaum 20 eine Schiene 22 eingeschoben.

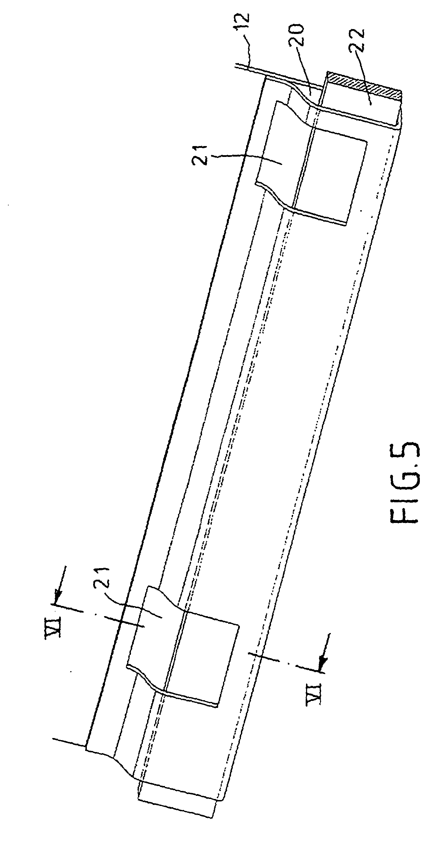

Fig. 5 zeigt eine perspektivische Ansicht eines Ausschnitts des Randbereichs des Innenbezugs 12 mit Blickrichtung auf dessen Innenseite.

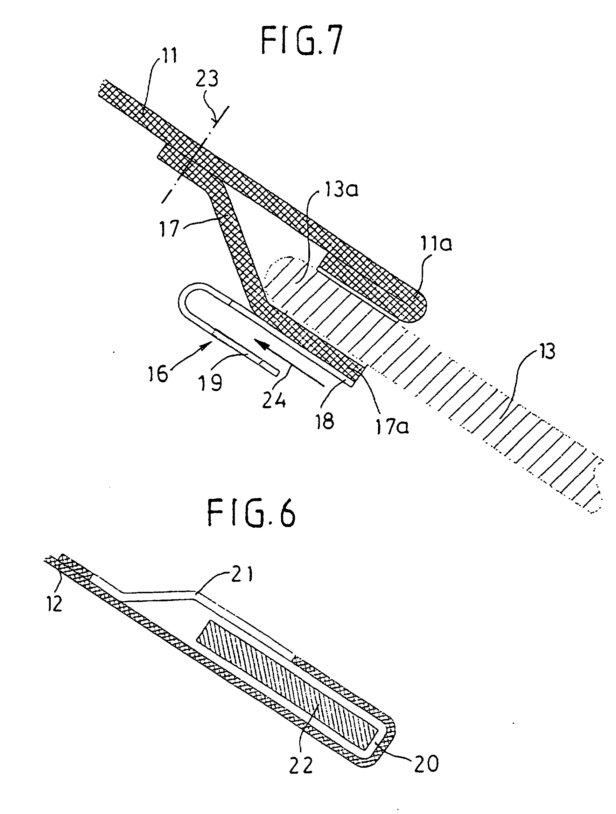

Fig. 6 veranschaulicht in gegenüber dem Original vergrößerter Darstellung einen Querschnitt entsprechend der Schnittlinie VI-VI in Fig. 5.

Fig. 7 zeigt einen der Fig. 6 entsprechenden Querschnitt, nunmehr jedoch durch den Außenbezug 11 und den diesem zugeordneten Rand 13a der Heckscheibe 13. Der umlaufende Rand 11 a des Außenbezugs 11 weist wie ersichtlich einen Umbug auf, in dessen Bereich der Außenbezug 11 mit dem Rand 13a der Scheibe 13 mittels eines hochfrequenzgeeigneten Klebers hochfrequenzverscheißt ist.

17 bezeichnet eine ebenfalls um die Scheibe 13 umlaufende Randabdeckung, die aus einem Streifen aus Verdeckstoff besteht und in einem mit der Linie 23 angedeuteten Bereich am Verdeckstoff befestigt, z.B. verschweißt, verklebt oder vernäht ist. Der den Scheibenrand 13a auf der Verdeck-Innenseite übergreifende Endabschnitt 17a der Randabdeckung 17 ist ebenfalls mit dem Scheibenrand 13a mittels eines HF-Klebers HF-verschweißt.

Auf der zum Fahrzeuginnenraum hinweisenden Seite des Endabschnitts 17a der Randabdeckung 17 sind die Hakenelemente 16 angebracht. Die Hakenelemente 16 umfassen die bereits erwähnte Basisplatte 18 und einen umgebogenen sowie zum Basisschenkel parallelen, jedoch schmaleren Klammerschenkel 19. Dieser Klammerschenkel 19 ist, wie Fig. 7 deutlich zeigt, derart umgebogen, dass er sich im wesentlichen parallel zur Heckscheibe 13 und zu dieser entlang weisend erstreckt. Das bedeutet, dass der Haken zur Heckscheibe hin offen ist, so dass aus Richtung der Heckscheibe (Richtungspfeil 24) die im Rand-Hohlsaum 20 des Innenbezugs 12 einliegende Schiene 22 hier eingehängt bzw. eingehakt werden kann.

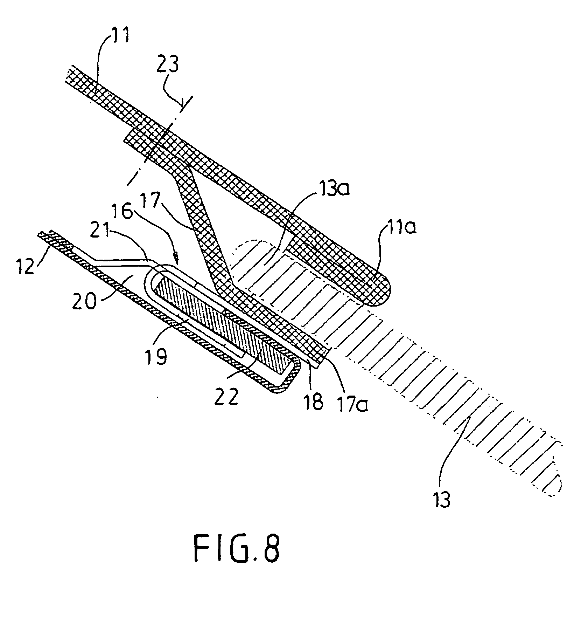

Fig. 8 zeigt in einem den Fig. 6 und 7 entsprechenden Schnitt die fertige und montierte Himmelanbindung. Diese Darstellung läßt die Einfachheit der Ausgestaltung und der Montage bzw. Demontage erkennen. Die Montage geschieht derart, dass man mit den Händen den Saum 20 mit der darin befindlichen Schiene 22 des Innenbezugs 12 ergreift und im wesentlichen in Richtung der Fläche der Scheibe 13 von hinten in die klammerartigen Haken 16 einführt, die über die Randabdeckung 17 mit dem Außenbezug 11 fest verbunden sind. Insbesondere bei geschlossenem Verdeck 10 steht der Innenbezug 12 so unter Spannung, dass diese Steckverbindung völlig sicher ist.

Um auszuschließen, dass die Verbindung sich während des Öffnens und Ablegens des Verdecks 10 lösen kann, sind die Hakenschenkel 19 als Federklammern ausgebildet und halten auch dann, wenn der Innenbezug 12 nicht unter Zugspannung steht, die Schiene 22 sicher fest.

Die Schiene 22 besteht aus einer metallischen Leiste mit flachrechteckigem Querschnitt. Vorzugsweise ist die Leiste in gewissem Umfang plastisch verformbar, so dass sie in ihrer Längsrichtung ggf. an eine Wölbung des Scheibenrandes anpassbar ist. Im übrigen liegt sie ersichtlich flach in der Klammer 21, so dass sie in ihrer Querrichtung sehr biegesteif ist und auch erheblichen Zugkräften seitens der Innenbespannung standhalten kann, ohne sich zu verformen.

Mit der Bezugsziffer 25 sind schließlich Ösen an den Enden der seitlichen Streifen 26 des Innenbezugs 12 bezeichnet zur Verbindung mit Verdeckgestängeteilen (Figur 2). Hierdurch werden die parallel zu den Längsseitenrändern der Scheibe 13 geführten, elastischen Verdeckstoffpartien zuverlässig gestrafft, wenn das Verdeck 10 geschlossen ist.

## Patentansprüche

1. Klappverdeck (10) für Kraftfahrzeuge wie Cabriolets od.dgl., mit einem äußeren Verdeckbezug (11), in den zumindest eine Scheibe (13) wie z.B. Heckscheibe integriert ist, und einem inneren Verdeckbezug (12) (dem sog. Himmel), der zumindest teilweise im Umfangsbereich der Scheibe (13) mittels lösbarer Verbindungselemente mit dem äußeren Verdeckbezug (11) verbunden ist, wobei eine Scheibenrandeinfassung von einem Ausschnitt des äußeren Verdeckbezugs (11) und einer damit verbundenen Randabdeckung (17) ausgebildet ist, an der erste Verbindungselemente befestigt sind, **dadurch gekennzeichnet, dass** die ersten Verbindungselemente wenigstens ein Hakenelement (16) umfassen, in das im wesentlichen scheibenflächenparallel sowie von der Scheibe (13) weg das wenigstens eine zweite Verbindungselement einsetzbar ist, welches eine in einem Saum (20) des Innenbezugs eingelegte Schiene (22) umfasst.

2. Klappverdeck nach Anspruch 1, **dadurch gekennzeichnet, dass** der Saum (20) des Innenbezugs (12) mit wenigstens einem fensterartigen Ausschnitt (21) zum Eingriff des wenigstens einen Hakenelements (16) versehen ist.

3. Klappverdeck nach Anspruch 1, **dadurch gekennzeichnet, dass** mehrere Hakenelemente (16) in Abständen zumindest längs des oberen Scheibenrandes und entsprechend zugeordnete fensterartige Ausnehmungen (21) im Saum (20) des Innenbezugs (12) angeordnet sind.

4. Klappverdeck nach einem der Ansprüche 1 bis 3, **dadurch gekennzeichnet, dass** das wenigstens eine Hakenelement (16) klammmerartig ausgebildet ist und wenigstens einen Federschenkel (19) umfaßt, der die Schiene (22) kraft- bzw. klemmschlüssig hält.

5. Klappverdeck nach einem der Ansprüche 1 bis 4, **dadurch gekennzeichnet, dass** die Schiene (22) aus einer einfachen, flachquerschnittigen, durch plastische Verformung dauerhaft an eine ggf. vorhandene Scheibenrandwölbung anpassbaren Leiste gebildet ist.

6. Klappverdeck nach Anspruch 5, **dadurch gekennzeichnet, dass** sich die Schiene (22) nur entlang dem oberen Scheibenrand erstreckt und seitliche Streifen des Innenbezugs (12) am Verdeckgestell abgespannt sind.

7. Klappverdeck nach einem der vorhergehenden Ansprüche, **dadurch gekennzeichnet, dass** das wenigstens eine Hakenelement (16) mit seinen jeweiligen Befestigungsschenkeln (18) an die Randabdeckung (17) angeklebt ist.

## Claims

1. A folding roof (10) for motor vehicles such as convertibles or the like, having an outside roof cover (11) in which at least one window (13), for example a rear window, is integrated and an inside roof cover (12) (the so-called inside roof lining), which is at least partly connected to the outside roof cover (11) in the peripheral region of the window (13) by means of detachable connecting elements, a window-edge enclosure being formed by a cutout in the outside roof cover (11) and an edge covering (17) connected thereto, on which first connecting elements are fastened, **characterised in that** the first connecting elements comprise at least one hook element (16) in which at least one second connecting element may be inserted substantially parallel to the window surface and away from the window (13), said second connecting element comprising a rail (22) placed within a seam (20) of the inside cover.

2. A folding roof according to Claim 1, **characterised in that** the seam (20) of the inside cover (12) is provided with at least one window-like cutout (21) for the engagement of the at least one hook element (16).

3. A folding roof according to Claim 1, **characterised in that** a plurality of hook elements (16) are arranged at spacings at least along the upper window edge and correspondingly associated window-like openings (21) are arranged in the seam (20) of the inside cover (12).

4. A folding roof according to one of Claims 1 to 3, **characterised in that** the at least one hook element (16) is of a clamp-like construction and comprises at least one spring leg (19) which holds the rail (22) with force fit and clamping fit.

5. A folding roof according to one of Claims 1 to 4, **characterised in that** the rail (22) is formed by a simple bar which has a flat cross-section and may be adapted in lasting manner to a possible outward curvature of the window edge by plastic deformation.

6. A folding roof according to Claim 5, **characterised in that** the rail (22) only extends along the upper window edge and lateral strips of the inside cover (12) are anchored to the roof frame.

7. A folding roof according to one of the preceding claims, **characterised in that** the at least one hook element (16) is bonded to the edge covering (17) by its respective fastening legs (18).

## Revendications

1. Capote (10) pour véhicules automobiles, tels que des cabriolets ou analogues, avec un revêtement de capote extérieur (11), dans lequel est intégré au moins une vitre (13), telle que par exemple une vitre arrière, et un revêtement de capote intérieur (12) (ce que l'on appelle le pavillon), relié au moins partiellement, dans la zone périphérique de la vitre (13), au revêtement de capote extérieure (11) à l'aide d'éléments de liaison désolidarisables, dans laquelle au moins une vitre (13) est intégrée, telle que par exemple une vitre arrière, une monture en bordure de vitre étant réalisée, par une découpure du revêtement de capote extérieur (11) et par un recouvrement de bordure (17), lui étant relié, auquel sont fixés des éléments de liaison, **caractérisée en ce que** les premiers éléments de liaison comprennent au moins un élément formant crochet (16) dans lequel le au moins un deuxième élément de liaison est susceptible d'être inséré, sensiblement parallèlement à la surface de vitre, ainsi qu'en s'écartant de la vitre (13), le au moins un deuxième élément de liaison comprenant une glissière (22) insérée dans un repli ou ourlet (20) du revêtement intérieur.

2. Capote selon la revendication 1, **caractérisée en ce que** l'ourlet (20) du revêtement intérieur (12) est muni d'au moins une découpure (21) du genre d'une fenêtre, pour l'engagement du au moins un élément formant crochet (16).

3. Capote selon la revendication 1, **caractérisée en ce que** plusieurs éléments formant crochet (16) sont disposés à distance, au moins le long du bord supérieur de vitre, et des évidements (21) du genre de fenêtre, associés de manière correspondante, sont disposés dans l'ourlet (20) du revêtement intérieur (12).

4. Capote selon l'une des revendications 1 à 3, **caractérisée en ce que** le au moins un élément formant crochet (16) est conformé à la façon d'une pince et comprend au moins une branche de ressort (19), maintenant la glissière (22) en liaison à interaction de forces ou de serrage.

5. Capote selon l'une des revendications 1 à 4, **caractérisée en ce que** la glissière (22) est formée par une bande simple, à section transversale plate, pouvant être adaptée de façon durable, par déformation plastique, à un bombement, le cas échéant existant, de la bordure de vitre.

6. Capote selon la revendication 5, **caractérisée en ce que** la glissière (22) s'étend uniquement le long du bord de vitre supérieur et des bandes latérales du revêtement intérieur (12) sont tendues sur l'ossature de capote.

7. Capote selon l'une des revendications précédentes, **caractérisée en ce qu'**au moins un élément formant crochet (16) est rapporté par collage, par ses branches de fixation (18) respectives, sur le revêtement de bordure (17).
